# FASCICULE DE BREVET EUROPEEN

(11) **EP 1 249 914 B1**
(45) Date de publication et mention de la délivrance du brevet: **29.09.2004**
(21) Numéro de dépôt: 02290871.9
(22) Date de dépôt: 08.04.2002
(51) Int. Cl.: H02G 15/013, H02G 3/06

(54) **Guide-câble pour boîtier étanche et ensemble d'étanchéité comportant un tel guide**
Kabelführung für abgedichtetes Gehäuse und Zusammenbau einer eine derartige Führung aufweisende Abdichtung
Cable guide for sealed housing and sealing assembly comprising such a guide

(30) Priorité: 12.04.2001 FR 0105048
(43) Date de publication de la demande: 16.10.2002
(73) Titulaire: Nexans, 75008 Paris (FR)
(72) Inventeur: Milanowski, Michel, 60540 Anserville (FR); Vincent, Alain, 77230 Juilly (FR)
(74) Mandataire: Lenne, Laurence

(56) Documents cités:
- EP-A- 0 942 507
- DE-A- 2 249 368
- US-A- 3 603 913
- US-A- 3 622 942
- US-A- 5 703 328

## Description

La présente invention concerne un guide-câble pour boîtier étanche et un ensemble d'étanchéité comportant un tel guide.

Elle se rapporte plus précisément à un guide pour câble, en particulier électrique ou optique de télécommunication, comportant une partie cylindrique destinée par une de ses extrémités à venir en butée contre un joint d'étanchéité destiné à être monté, en entrée d'un boîtier étanche de protection d'épissures contenant un gaz sous pression, dans une tubulure solidaire du boîtier, et destinée par son autre extrémité à être poussée par un écrou vissé sur ladite tubulure.

Un tel guide est connu du document de brevet EP-0 942 507.

Ce document décrit un boîtier étanche d'appareillage à accès pour câble comportant un ensemble d'étanchéité constitué d'un dispositif presseur monté à l'extrémité de la tubulure pour comprimer un joint installé autour du câble. Ce dispositif presseur comporte un écrou destiné à être vissé en extrémité de la tubulure et, insérée entre cet écrou et le joint, une douille de pression appelée couramment guide-câble ou presseur. Cette douille a une partie cylindrique centrale saillante lui permettant de venir périphériquement en butée d'un côté sur une couronne interne d'appui que comporte l'écrou et de l'autre côté sur un manchon par une partie cylindrique. Le guide est donc constitué d'une douille cylindrique sans contact direct avec le câble.

En cas de flexion du câble à l'extérieur du boîtier, par exemple en cas de manipulation de ce câble ou de nécessité de courbure de celui-ci pour des raisons de raccordement, un effort est créé sur l'extrémité du joint dont l'alésage intérieur est alors déformé radialement et ceci libère un espace entre l'alésage et le câble pouvant entraîner une fuite du gaz sous pression.

Par ailleurs, le document de brevet DE 22 49 368, qui représente l'état de la technique le plus proche, décrit un guide comportant une partie cylindrique prolongée du côté opposé au boîtier par au moins une languette tronconique radialement déformable comportant à son extrémité une bride de serrage destinée à être serrée sur la périphérie du câble, et un joint d'étanchéité.

L'invention résout le problème précédent et pour ce faire, selon l'invention, elle propose un ensemble d'étanchéité pour câbles, en particulier électriques ou optiques de télécommunication, destiné à être monté en entrée d'un boîtier étanche de protection d'épissures contenant un gaz sous pression, comportant un guide-câble comportant une partie cylindrique prolongée du côté opposé au boîtier par au moins une languette tronconique radialement déformable comportant à son extrémité une bride de serrage destinée à être serrée sur la périphérie du câble, et un joint d'étanchéité, caractérisé en ce que ledit guide est une pièce, venant par une de ses extrémités en butée contre ledit joint d'étanchéité destiné à être monté dans une tubulure solidaire du boîtier, et étant destiné à être poussé par son autre extrémité par un écrou vissé sur ladite tubulure.

Ainsi est créé au niveau de la bride de serrage un maintien du câble relativement espacé du joint et, en cas de flexion du câble, cette bride absorbe l'effort de déformation évitant toute déformation au niveau du joint et supprimant tout risque de fuite.

De plus, compte tenu de leur élasticité, les languettes peuvent s'adapter au diamètre du câble et le joint n'est donc pas tributaire d'un diamètre de câble particulier.

Selon un mode de réalisation préféré, ledit guide comporte au moins deux languettes réparties sur la périphérie de son extrémité opposée au boîtier.

De cette façon, est réalisé un maintien du câble sur toute sa périphérie assurant une tenue de ce dernier quelle que soit la direction de la flexion éventuellement appliquée.

De préférence, ladite bride comporte sur sa face interne tournée vers le câble des dents de blocage.

Ces dents, lors du serrage de la bride sur lecâble, s'ancrent sur le revêtement du câble et assurent le blocage de ce dernier.

Avantageusement, un collier de serrage est associé audit guide, destiné à être serré sur ladite bride.

Ce collier assure un serrage de réalisation particulièrement simple et efficace de la bride.

De préférence, ledit guide comporte sur sa face d'extrémité tournée vers le boîtier au moins une nervure de blocage destinée à s'ancrer dans un joint d'étanchéité disposé dans ladite tubulure et bloqué dans celle-ci par un agencement de nervures et de rainures associées, le guide étant destiné par son autre extrémité à être poussée par un écrou vissé sur ladite tubulure.

Cette nervure est destinée à venir s'ancrer dans le joint et assure le blocage en rotation du câble, lors du vissage de l'écrou.

L'invention est décrite ci-après plus en détail à l'aide de figures ne représentant qu'un mode de réalisation préféré de l'invention.

La figure 1 est une vue en coupe longitudinale d'un ensemble d'étanchéité comportant un guide-câble conforme à l'invention et destiné au montage d'un câble unique.

La figure 2 est une vue en perspective de cet ensemble d'étanchéité à l'état monté.

La figure 3 est une vue en perspective de cet ensemble d'étanchéité à l'état avant montage.

La figure 4 est une vue en perspective éclatée d'un ensemble d'étanchéité comportant un guide-câble conforme à l'invention et destiné au montage de deux câbles.

La figure 5 est une vue en perspective éclatée de cet ensemble d'étanchéité vu d'un côté opposé.

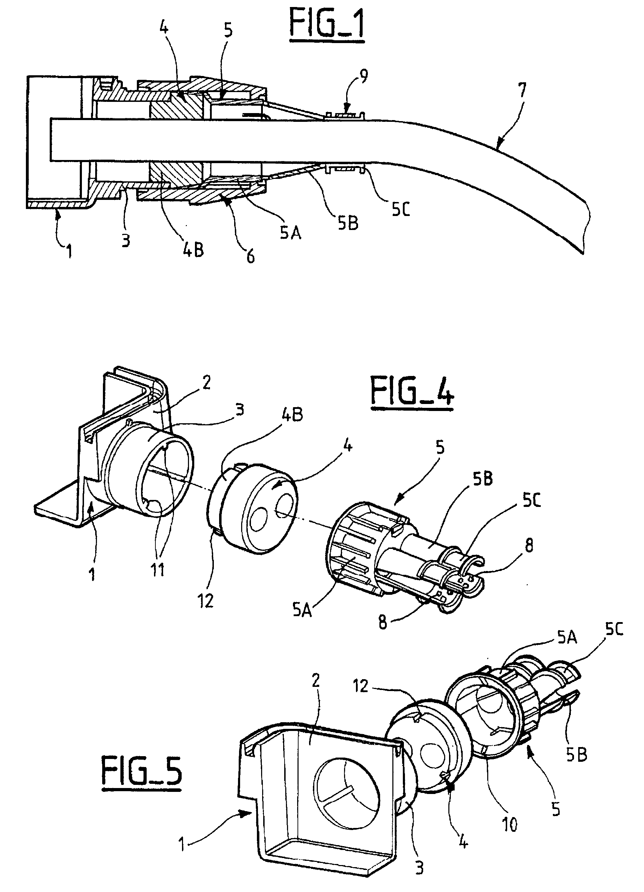

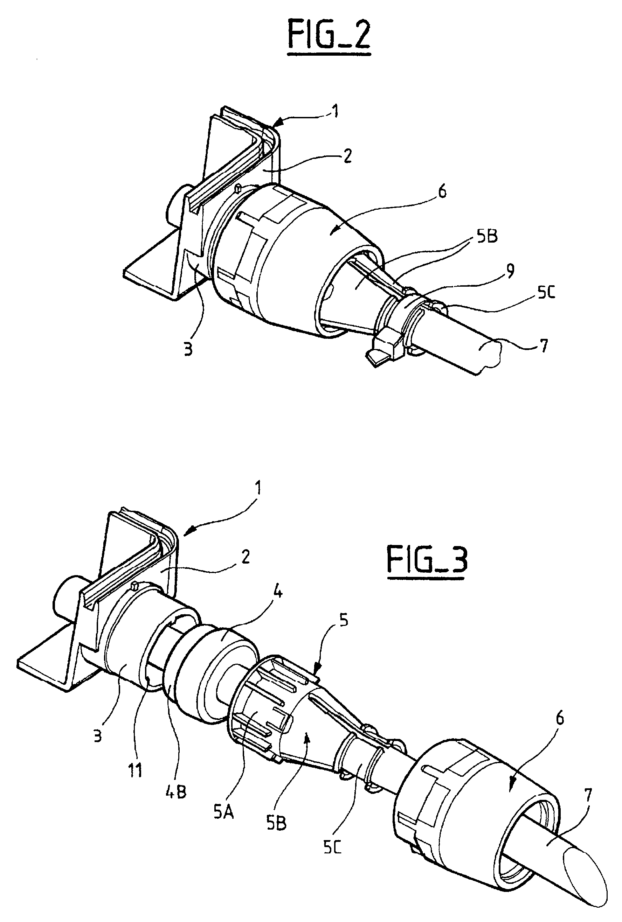

Les figures 1 à 5 représentent des ensembles d'étanchéité pour câbles, en particulier électriques ou optiques de télécommunication, destinés à être montés en entrée d'un boîtier 1 étanche de protection d'épissures contenant un gaz sous pression. Dans le cas de câbles optiques, ce gaz peut être de l'air sous pression.

Le boîtier 1 comporte une entrée de câble(s) à travers une face frontale du corps 2 de boîtier. L'entrée définit un passage ou tubulure 3 totalement fermé-sur sa périphérie, solidaire du boîtier 1 et dont la face extérieure est cylindrique et taraudée. Elle reçoit un joint 4 avec sa partie d'étanchéité intérieure 4B disposée vers l'intérieur du boîtier 1 et encastrée dans la tubulure 3 et un agencement en soi connu de guide-câble 5 et d'écrou ou presse-étoupe 6 vissé sur la tubulure 3 dans la partie taraudée.

Les figures 4 et 5 ne représentent pas ledit écrou afin de permettre une meilleure vue du guide-câble 5.

Le guide 5 comporte une partie cylindrique 5A destinée par une de ses extrémités à venir en butée contre le joint d'étanchéité 4 et destinée par son autre extrémité à être poussée par l'écrou 6 vissé sur ladite tubulure 3. Cette partie 5A est prolongée du côté opposé au boîtier 1 par au moins une languette tronconique 5B radialement déformable comportant à son extrémité une bride de serrage 5C destinée à être serrée sur la périphérie du câble 7.

De façon préférentielle et comme représenté, cette partie 5A comporte au moins deux languettes 5C réparties sur la périphérie de son extrémité opposée au boîtier 1. Sur la variante représentée sur les figures 1 à 3, sont prévues trois languettes 5C et sur la variante représentée sur les figures 4 et 5, sont prévues deux languettes 5C. Ainsi est assuré un maintien du câble efficace dans toutes les directions.

Comme particulièrement visible sur les figures 4, les brides 5C comporte avantageusement sur leur face interne tournée vers le câble 7 des dents de blocage 8, destinées à bloquer efficacement le câble 7 lors du serrage des brides 5C au moyen d'un collier de serrage 9 associé audit guide 5 et destiné à être serré sur lesdites bride 5C.

Avantageusement comme visible sur la figure 5, le guide 5 comporte sur sa face d'extrémité tournée vers le boîtier 1 au moins une nervure de blocage 10 destinée à s'ancrer dans le joint d'étanchéité 4 disposé dans ladite tubulure 3. De préférence, plusieurs nervures 10 sont prévues réparties sur la périphérie du guide 5 et viennent s'ancrer dans le joint 4, lors du vissage de l'écrou 6.

Par ailleurs, le joint 4 est bloqué dans la tubulure 3 par un agencement de nervures et de rainures associées, avantageusement des nervures 11 réparties sur la périphérie de la surface intérieure de la tubulure 3 et des rainures 12 réparties sur la périphérie de la partie d'étanchéité intérieure 4B du joint 4.

De cette façon, une fois introduit dans la tubulure 3, le joint 4 est bloqué en rotation. Lors du montage, le guide 5 vient s'ancrer grâce à ses nervures 10 dans le joint 4 et est également bloqué en rotation. Le câble quant à lui est serré par le collier 9 sur le guide 5. En conséquence, lors du vissage de l'écrou 6, le câble 7 est immobilisé en rotation. Ceci est particulièrement utile dans le cas d'un ensemble d'étanchéité destiné au montage de plusieurs câbles, comme représenté sur les figures 4 et 5, car dans ce cas les câbles ne sont pas alignés sur l'axe de rotation de l'écrou et, sans blocage, seraient entraînés dans un déplacement de rotation autour de cet axe entraînant leur flexion et susceptible de provoquer des fuites de gaz.

## Revendications

1. Ensemble d'étanchéité pour câbles, en particulier électriques ou optiques de télécommunication, destiné à être monté en entrée d'un boîtier (1) étanche de protection d'épissures contenant un gaz sous pression, comportant un guide-câble comportant une partie cylindrique (5A) prolongée du côté opposé au boîtier (1) par au moins une languette (5B) tronconique radialement déformable comportant à son extrémité une bride de serrage (5C) destinée à être serrée sur la périphérie du câble (7), et un joint d'étanchéité (4), **caractérisé en ce que** ledit guide est une pièce venant par une de ses extrémités en butée contre ledit joint d'étanchéité (4) destiné à être monté dans une tubulure (3) solidaire du boîtier (1), et étant destiné à être poussé par son autre extrémité par un écrou (6) vissé sur ladite tubulure (3).

2. Ensemble selon la revendication 1, **caractérisé en ce que** ledit guide comporte au moins deux languettes (5B) réparties sur la périphérie de son extrémité opposée au boîtier (1).

3. Ensemble selon la revendication 1 ou 2, **caractérisé en ce que** ladite bride (5C) comporte sur sa face interne tournée vers le câble (7) des dents de blocage (8).

4. Ensemble selon l'une des revendications précédentes, **caractérisé en ce qu'**un collier de serrage (9) est associé audit guide (5), destiné à être serré sur ladite bride (5C).

5. Ensemble selon l'une des revendications précédentes, **caractérisé en ce que** ledit guide (5) comporte sur sa face d'extrémité tournée vers le boîtier (1) au moins une nervure de blocage (10) destinée à s'ancrer dans un joint (4) d'étanchéité disposé dans ladite tubulure (3) et bloqué dans celle-ci par un agencement de nervures et de rainures associées (11, 12), le guide (5) étant destiné par son autre extrémité à être poussée par ledit écrou (6) vissé sur ladite tubulure (3).

## Patentansprüche

1. Dichtungsgruppe für Kabel, insbesondere für elektrische oder optische Telekommunikationskabel, die dazu bestimmt ist, eingehend in ein dichtes Spleißschutzgehäuse (1), das ein Druckgas enthält, montiert zu werden, umfassend eine Kabelführung, die einen zylindrischen Teil (5A) umfasst, der sich an der dem Gehäuse (1) gegenüberliegenden Seite durch mindestens eine radial deformierbare kegelstumpfartige Zunge (5B) verlängert, die an ihrem Ende ein Spannelement (5C) aufweist, das dazu bestimmt ist, auf der Peripherie des Kabels (7) fixiert zu werden, und ein Dichtungselement (4), **dadurch gekennzeichnet, dass** die besagte Führung ein Teil ist, das durch eines seiner Enden gegen das besagte Dichtungselement (4) geführt wird, das dazu bestimmt ist, in einen mit dem Gehäuse (1) verbundenen Rohrstutzen (3) montiert zu werden, und das dazu bestimmt ist, durch sein anderes Ende mittels einer auf den besagten Rohrstutzen (3) geschraubten Mutter (6) angedrückt zu werden.

2. Gruppe nach Anspruch 1, **dadurch gekennzeichnet, dass** die besagte Führung mindestens zwei Zungen (5B) aufweist, die auf der Peripherie ihres dem Gehäuse (1) entgegengesetzten Endes verteilt sind.

3. Gruppe nach Anspruch 1 oder 2, **dadurch gekennzeichnet, dass** das besagte Spannelement (5C) auf seiner dem Kabel (7) zugewandten Innenseite Fixierzähne (8) aufweist.

4. Gruppe nach einem der vorhergehenden Ansprüche, **dadurch gekennzeichnet, dass** die besagte Führung (5) mit einer Schlauchschelle (9) verbunden ist, die dazu bestimmt ist, auf dem besagten Spannelement (5C) fixiert zu werden.

5. Gruppe nach einem der vorhergehenden. Ansprüche, **dadurch gekennzeichnet, dass** die besagte Führung (5) auf ihrer dem Gehäuse (1) zugewandten Stirnseite mindestens eine Fixierrippe (10) aufweist, die dazu bestimmt ist, sich in einem Dichtungselement (4) zu verankern, das im besagten Rohrstutzen (3) angeordnet ist und in diesem durch eine Anordnung von verbundenen Rippen und Rillen (11, 12) gehalten wird, wobei die Führung (5) an ihren anderen Ende dazu bestimmt ist, mittels der auf den besagten Rohrstutzen (3) geschraubten Mutter (6) angedrückt zu werden.

## Claims

1. Sealing assembly for cables, in particular electric or telecommunication optic cables, intended to be mounted at the inlet of a sealed, splice protection casing (1) containing a pressurized gas, comprising a cable guide including a cylindrical part (5A) extended on the opposite side to casing (1) by at least one radially deformable truncated tongue(5B) having at its end part a flange (5C) intended to be tightened over the periphery of cable (7), and a gasket (4), **characterized in that** said guide is a part of which one end abuts said gasket (4), intended, to be mounted in tubing (3) integral with casing (1) and being intended to be pushed via its other end by a nut (6) screwed onto said tubing (3).

2. Assembly as in claim 1, **characterized in that** said guide comprises at least two tongues (58) distributed over the periphery of its end opposite the casing (1).

3. Assembly as in claim 1 or 2, **characterized in that** said flange (5C) on its inner surface facing cable (7) comprises locking teeth (8).

4. Assembly as in any of the preceding claims **characterized in that** a clamp collar (9) is associated with said guide (5) intended to be tightened over said flange (5C).

5. Assembly as in any of the preceding claims, **characterized in that** said guide (5) on its end surface facing casing (1) comprises at least one locking rib (10) intended to be anchored inside a gasket (4) arranged in said tubing (3) and locked within the latter by an arrangement of associated ribs and grooves (11,12), guide (5) being intended via its other end to be pushed by said nut (6) screwed onto said tubing (3) .
